# EUROPÄISCHE PATENTSCHRIFT

(11) **EP 4 198 822 B1**
(45) Veröffentlichungstag und Bekanntmachung des Hinweises auf die Patenterteilung: **17.09.2025**
(21) Anmeldenummer: 22212237.6
(22) Anmeldetag: 08.12.2022
(51) Int. Cl.: G06K 17/00, B65D 1/24

(54) **GETRÄNKEKASTEN MIT ZENTRIERFUNKTION FÜR FLASCHEN UND ZUSÄTZLICHER AUSSPARUNG FÜR SERIALISIERUNGSANWENDUNG**
BEVERAGE CRATE WITH CENTRING FUNCTION FOR BOTTLES AND ADDITIONAL RECESS FOR SERIALISATION APPLICATION
CASIER À BOISSONS AVEC FONCTION DE CENTRAGE POUR BOUTEILLES ET ÉVIDEMENT SUPPLÉMENTAIRE POUR APPLICATION DE SÉRIALISATION

(30) Priorität: 14.12.2021 DE 102021133125
(43) Veröffentlichungstag der Anmeldung: 21.06.2023
(73) Patentinhaber: Krones AG, 93073 Neutraubling (DE)
(72) Erfinder: Pilney, Elisabeth, 93073 Neutraubling (DE); Mehringer, Katarina, 93073 Neutraubling (DE); Rupp, Eduard, 93073 Neutraubling (DE)
(74) Vertreter: Hannke Bittner & Partner mbB Regensburg

(56) Entgegenhaltungen:
- EP-A2- 0 094 530
- EP-A2- 2 682 756
- DE-U- 1 934 560
- DE-U1- 202017 105 355
- US-A1- 2005 211 593
- US-A1- 2005 218 126

## Beschreibung

Die vorliegende Erfindung bezieht sich auf eine Vorrichtung und ein Verfahren zum Inspizieren von Gebinden. Aus dem Stand der Technik sind zahlreiche Vorrichtungen und Verfahren zum Inspizieren von Gebinden und insbesondere von Getränkekästen, die mit Behältnissen bestückt sind, bekannt.

Auch sind aus dem Stand der Technik zahlreiche Getränkekästen bekannt, die unterschiedlichen Funktionen dienen. So sind beispielsweise aus der EP 0114392 A1 und der EP 0452751 A1 jeweils Getränkekästen bekannt, welche eine Zentrierfunktion für Flaschen aufweisen. Diese dient zur exakten Ausrichtung der Behältnisse in dem Aufnahmebehältnis wie einem Getränkekasten. So können Behältnisse und insbesondere Flaschen sicherer und geräuschärmer transportiert werden. Daneben wird auch die Entnahme der Flaschen durch einen Roboter erleichtert.

Daneben ist es aus dem Stand der Technik bekannt, Behältnisse zu individualisieren, was beispielsweise durch das Anbringen von Markierungen und 2-D Codes insbesondere QR - oder Datamatrix Codes, Transponder oder dergleichen an den Behältnissen erleichtert wird. Diese Markierungen können an unterschiedlichen Positionen der Behältnisse angebracht werden, beispielsweise an deren Umfangswandung. Dies führt jedoch dazu, dass die Behältnisse in ihrer Drehstellung ausgerichtet werden müssen, um die Markierungen zu erfassen.

Probleme bereitet dabei allerdings die teilweise sehr hohe Produktionsgeschwindigkeit. Falls Behältnisse (insbesondere in zukünftigen Anwendungen) serialisiert werden sollen und/oder individualisiert werden sollen (für eine Nachverfolgbarkeit in der Produktion oder eine Informationsgewinnung für den Endverbraucher wie Herkunft oder Mehrwegzyklen), könnte das beispielsweise mit einem QR - Code in einem vorgegebenem Bereich der Behältnisse realisiert werden.

Der vorliegenden Erfindung liegt daher die Aufgabe zugrunde, eine derartige Serialisierung und/oder Nachverfolgung von Behältnissen zu erleichtern. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Inspizieren von Gebinden werden Gebinde, insbesondere in Form von mit Behältnissen bestückte Aufnahmebehältnisse mittels einer ersten Transporteinrichtungen transportiert, wobei die Behältnisse in ihren Bodenbereichen jeweils eine Markierung aufweisen, welche die Behältnisse eindeutig identifiziert und/oder welche Rückschlüsse auf wenigstens eine charakteristische Eigenschaft der Behältnisse ermöglicht.

Erfindungsgemäß nimmt eine Bildaufnahmeeinrichtung wenigstens ein (ortsaufgelöstes) Bild der Bodenbereiche der in dem Gebinde und/oder Aufnahmebehältnis befindlichen Behältnisse auf und es wird wenigstens eine Information ausgegeben, welche für die an den Behältnissen angeordneten Markierungen und/oder die Behältnisse und/oder wenigstens eine Eigenschaft der Behältnisse charakteristisch ist.

Bevorzugt ist jede Markierung für dasjenige Behältnis, an dem sie angeordnet ist, charakteristisch. Dies bedeutet, dass sich die Markierungen aller an den besagten Behältnissen angeordneten Markierungen voneinander in wenigstens einer Eigenschaft und/oder in wenigstens einem Merkmal unterscheiden.

Die Anmelderin hat ermittelt, dass eine Anbringung der besagten Markierungen an dem Boden der Behältnisse mehrere Vorteile mit sich bringt. Ein wesentlicher Vorteil einer an dem Bodenbereich angeordneten Markierung besteht darin, dass diese Markierung unabhängig von einer Drehstellung des Behältnisses bezüglich seiner Längsrichtung optisch erfassbar ist. Ein weiterer Vorteil der Anbringung der Markierung am Bodenbereich des Behältnisses besteht darin, dass die Umfangswandung der Behältnisse frei von derartigen Markierungen (welche den Endverbraucher stören könnten) bleiben kann.

Ein Nachteil einer Anbringung der Markierung in dem Bodenbereich besteht darin, dass dieser Bodenbereich bei einer Vielzahl von Transporteinrichtungen, wie z.B. bei Transportbändern nicht oder nur schwer zugänglich bzw. beobachtbar ist.

Bevorzugt handelt es sich bei dem Bodenbereich des Behältnisses um demjenigen Bereich, der von unten her sichtbar ist. d.h., die bei einem aufrecht stehenden Behältnis der jeweiligen Unterlage zugewandte Außenoberfläche des Behältnisses.

Bevorzugt handelt es sich bei den Behältnissen um Flaschen und insbesondere um Kunststoffflaschen oder Glasflaschen. Bei einer weiteren bevorzugten Ausführungsform handelt es sich bei dem Aufnahmebehältnis um ein Aufnahmebehältnis, welches zur Aufnahme einer Vielzahl an Behältnissen und insbesondere einer Vielzahl von Flaschen geeignet und bestimmt ist.

Bevorzugt werden die Böden der Behältnisse durch entsprechende Öffnungen des Aufnahmebehältnisses (insbesondere des oder der Bodenbereiche des Aufnahmebehältnisses bzw. der Aufnahmebereiche) hindurch betrachtet. Besonders bevorzugt handelt es sich bei dem bzw. den Aufnahmebehältnissen um Kästen, Kisten oder Kartons, die zur Aufnahme der Behältnisse geeignet und bestimmt sind. Besonders bevorzugt sind in dem Aufnahmebehältnis wenigstens vier, bevorzugt wenigstens sechs und bevorzugt wenigstens acht Behältnisse aufgenommen. Bevorzugt sind in den Aufnahmebereichen des Aufnahmebehältnisses höchstens 40, bevorzugt höchstens 35 bevorzugt höchstens 30 und bevorzugt höchstens 25 Behältnisse aufgenommen.

Besonders bevorzugt handelt es sich bei den Markierungen um maschinenlesbare Markierungen und/oder um berührungslos und insbesondere optisch auslesbare Markierungen. Besonders bevorzugt sind die Markierungen aus einer Gruppe von Markierungen ausgewählt, welche Barcodes, QR - Codes und dergleichen enthält. Es wäre jedoch auch denkbar, dass an den Behältnissen andere Markierungen, beispielsweise Smartlabels angeordnet sind.

Bei einer besonders bevorzugten Ausführungsform ist eine Bildauswerteeinrichtung vorgesehen, welche die aufgenommenen Bilder auswertet. Dabei kann die Bildaufnahmeeinrichtung die Markierungen identifizieren und besonders bevorzugt auch die Markierungen auslesen bzw. auswerten.

Bei einer bevorzugten Ausführungsform sind die Markierungen untrennbar mit den Behältnissen verbunden. Hierunter wird insbesondere verstanden, dass eine Entfernung der Markierung von den Behältnissen nicht ohne eine Zerstörung des Behältnisses möglich ist. Dabei ist es möglich, dass die Markierung unmittelbar auf eine Außenoberfläche des Behältnisses aufgedruckt (insbesondere mittels Direktdruck) oder eingraviert (beispielsweise mittels Lasergravur) ist.

Bei einer weiteren bevorzugten Ausführungsform ist eine Markierung charakteristisch für Eigenschaften des Behältnisses, an dem sie angeordnet ist. Bei diesen Eigenschaften kann es sich um Eigenschaften handeln wie etwa einem Alter des Behältnisses, eine Anzahl der Umläufe dieses Behältnisses, einem Hersteller des Behältnisses, einem Material des Behältnisses, ein Getränk, mit dem dieses Behältnis befüllt ist und dergleichen.

Besonders bevorzugt handelt es sich bei den Behältnissen um Mehrwegbehältnisse. Dabei kann es sich sowohl um Glasbehältnisse als auch um Kunststoffbehältnisse (beispielsweise aus PET) handeln. Besonders bevorzugt dient die Markierung zu einer Serialisierung der Behältnisse.

Besonders bevorzugt weist das Aufnahmebehältnis damit Aufnahmebereiche für die einzelnen Behältnisse auf und zusätzlich insbesondere in einem Bodenbereich eine Aussparung, beispielsweise in Form eines Rechtecks und insbesondere eines Quadrats, welches eine Beobachtung bzw. Bildaufnahme der an dem Behältnis angebrachten Markierung ermöglicht.

Besonders bevorzugt dient die Bildaufnahmeeinrichtung, bei der es sich insbesondere um eine Kamera oder ein Kamerasystem handelt der Auslesung der an den Flaschenböden angebrachten Markierungen, beispielsweise QR - Codes. Diese Bildaufnahmeeinrichtung ist dabei bevorzugt so angeordnet, dass eine weitere Maschine wie beispielsweise ein Roboter die Aufnahmebehältnisse darüber bewegen und insbesondere darüber schwenken kann.

Dabei ist es möglich, dass die Aufnahmebehältnisse oder auch eine Palette mit Aufnahmebehältnissen über der Bildaufnahmeeinrichtung angehalten wird bzw. werden, sodass die Bildaufnahmeeinrichtung die sichtbaren Flaschenböden und damit die Markierungen auslesen kann.

Besonders bevorzugt ist die Bildaufnahmeeinrichtung stationär angeordnet und die Aufnahmebehältnisse werden an der Bildaufnahmeeinrichtung vorbei transportiert. Dabei ist besonders bevorzugt die Bildaufnahmeeinrichtung neben der oben erwähnten Transporteinrichtung angeordnet, auf dem die Aufnahmebehältnisse mit den Behältnissen transportiert werden. Auf diese Weise wird möglichst wenig Zeit für das Auslesen beansprucht.

Es wäre jedoch auch denkbar, dass die Bildaufnahmeeinrichtung an einer Greifeinrichtung angeordnet ist, welche die Behältnisse von der ersten Transporteinrichtung aufnimmt.

Es wäre jedoch auch denkbar, dass eine Transporteinrichtung vorgesehen ist, welche die Aufnahmebehältnisse bodenfrei transportiert so dass eine unterhalb dieser Transporteinrichtung angeordnete Bildaufnahmeeinrichtung wie eine Kamera die Behältnisböden bzw. die an diesen Behältnisböden angeordneten Markierungen erfassen kann. Eine derartige Transporteinrichtung könnte beispielsweise Seitenführungsbänder aufweisen, oder Transportbänder, welche die Aufnahmebehältnisse nur an deren Rändern abstützt. Auch könnte eine derartige Transporteinrichtung transparente Bänder aufweisen, auf denen die Aufnahmebehältnisse gefördert werden.

Dabei ist es möglich, dass Bestandteile der Bildaufnahmeeinrichtung, wie beispielsweise Kameraobjektive direkt auf die Aufnahmebehältnisse ausgerichtet sind, oder aber mithilfe eines oder mehrerer Spiegel, beispielsweise eines Spiegelkabinetts auch horizontal bezüglich den Aufnahmebehältnissen angeordnet sind, um gegebenenfalls den Einbau und die Instandhaltung der Bildaufnahmeeinrichtung zu erleichtern.

Durch den Einsatz derartiger Spiegel oder Spiegelkabinette kann der Erfassungswinkel mit einer Bildaufnahmeeinrichtung bzw. Kamera vergrößert werden. Je nach Größe einer Palette ist es möglich, nur eine Bildaufnahmeeinrichtung zu verwenden, es wäre jedoch auch denkbar, mehrere Bildaufnahmeeinrichtungen beziehungsweise Kameras zu verwenden. Dies kann entsprechend in der Auswertesoftware berücksichtigt werden.

Bei einem weiteren bevorzugten Verfahren werden die Aufnahmebehältnisse und insbesondere die Behältnisböden zum Zwecke der Bildaufnahme beleuchtet. Bevorzugt erfolgt dabei diese Beleuchtung synchronisiert mit der Bildaufnahme.

Bei einer weiteren bevorzugten Ausführungsform nimmt die Bildaufnahmeeinrichtung genau ein Bild der Bodenbereiche der Behältnisse auf, es wäre jedoch auch denkbar, dass mehrere Bilder aufgenommen werden.

Einem weiteren bevorzugten Verfahren wird wenigstens ein Gebinde bzw. ein mit einer Vielzahl von Behältnissen bestücktes Aufnahmebehältnis bevorzugt mehrere und besonders bevorzugt alle Aufnahmebehältnisse mittels einer Greifeinrichtung gegriffen und in einem Bildaufnahmebereich der Bildaufnahmeeinrichtung verbracht. Dies kann wie unten genauer beschrieben, beispielsweise durch ein Schwenken in einen Bildaufnahmebereich der Bildaufnahmeeinrichtung erfolgen.

Es wird in diesem Zusammenhang darauf hingewiesen, dass der Begriff Gebinde im Rahmen der vorliegenden Patentanmeldung insbesondere die mit Behältnissen bestückten Aufnahmebehältnisse bezeichnet und es sich bei den Aufnahmebehältnissen insbesondere im (Getränke)kästen, (Getränke)kisten handelt.

Besonders bevorzugt werden die Gebinde bzw. die Aufnahmebehältnisse mittels einer zweiten Transporteinrichtung, welche sich insbesondere von der ersten Transporteinrichtung unterscheidet zum Zwecke einer Bildaufnahme transportiert.

Dabei ist es möglich, dass diese zweite Transporteinrichtung, insbesondere ein Roboter, die Gebinde von der ersten Transporteinrichtung, beispielsweise ein Transportband, entnimmt und zur Bildaufnahme zu der Bildaufnahmeeinrichtung bewegt, beispielsweise schwenkt.

Anschließend können die Behältnisse wieder auf der ersten Transporteinrichtung angeordnet werden. Bei einer bevorzugten Ausführungsform sind mehrere zweite Transporteinrichtungen vorgesehen, welche die Gebinde in einen oder mehrere Bildaufnahmebereiche einer oder mehrerer Bildaufnahmeeinrichtungen verbringen. Auf diese Weise kann der Durchsatz bei höheren Transportgeschwindigkeiten erhöht werden.

Besonders bevorzugt handelt es sich bei der Greifeinrichtung um einen (Roboter)greifer. Besonders bevorzugt handelt es sich bei der Greifeinrichtung um eine aktive und/oder eine gesteuerte Greifeinrichtung, welche zwischen einer Öffnungsstellung, in der Eingriff des Behältnisses gelöst ist und einer Greifstellung, in der das Gebinde gegriffen werden kann, geschalten werden kann. Besonders bevorzugt ist die Greifeinrichtung dazu geeignet und bestimmt, die Aufnahmebehältnisse an wenigstens zwei gegenüberliegenden Wänden zu greifen.

Besonders bevorzugt werden die Gebinde oberhalb eines Bildaufnahmebereichs der Bildaufnahmeeinrichtung transportiert, sodass die Bildaufnahmeeinrichtung die Behältnisböden - insbesondere von unten - beobachten kann. Besonders bevorzugt ist ein Transportpfad diese zweiten Transporteinrichtungen, wie der Robotereinrichtung im Wesentlichen frei programmierbar.

Bei einem weiteren bevorzugten Verfahren entnimmt die zweite Transporteinrichtung die Aufnahmebehältnisse von der ersten Transporteinrichtung und bevorzugt legt die zweite Transporteinrichtung die Aufnahmebehältnisse zeitlich und/oder örtlich nach der Bildaufnahme wieder auf der ersten Transporteinrichtung ab. Bevorzugt werden die Aufnahmebehältnisse von der ersten Transporteinrichtung zum Zwecke der Bildaufnahme entnommen und bevorzugt auch wieder auf der ersten Transporteinrichtung abgelegt.

Bei einem weiteren bevorzugten Verfahren wird eine Bewegung der Gebinde bzw. Aufnahmebehältnisse wenigstens zeitweise angehalten, um so ein Bild der Bodenbereiche aufzunehmen. So ist es möglich, dass die Gebinde von der ersten Transporteinrichtung entnommen werden, über die Bildaufnahmeeinrichtung transportiert werden und dort die Bewegung angehalten wird. Anschließend können die Gebinde wieder zurück auf die erste Transporteinrichtung (gegebenenfalls jedoch an einer anderen Position) verbracht werden.

Einem weiteren bevorzugten Verfahren werden die Behältnisse gegenüber den Aufnahmebehältnissen in vorgegebenen Positionierungen positioniert. So können beispielsweise Einführhilfen wie Einführschrägen vorgesehen sein, welche die Position der Behältnisse und insbesondere auch der Behältnisböden gegenüber den Aufnahmebereichen genau bestimmen bzw. ausrichten.

Einem weiteren bevorzugten Verfahren wird ein bestimmter Anteil bevorzugt wenigstens ein und bevorzugt mehrere Behältnisse nach der Inspektion aus dem Aufnahmebehältnis entnommen. So wäre es Beispielsweise möglich, dass Behältnisse entnommen werden, deren Markierung auf einen Fehler hinweist, oder aber auf die Notwendigkeit dieses Behältnis auszuschleusen, beispielsweise eine bereits überschrittene maximale Anzahl an Umläufen dieses Behältnisses. Daneben wäre es auch möglich, dass Behältnisse ausgeschleust werden, welche keine Markierung aufweisen.

Zu diesem Zweck kann eine Entnahmeeinrichtung vorgesehen sein, welche insbesondere in der Transportrichtung der Aufnahmebehältnisse stromabwärts der Bildaufnahmeeinrichtung und/oder der zweiten Transporteinrichtung angeordnet ist. Bevorzugt ist diese Entnahmeeinrichtung dazu geeignet und bestimmt, einzelne Behältnisse aus dem Aufnahmebehältnis zu entnehmen. Zu diesem Zweck kann diese Entnahmeeinrichtung eine oder mehrere Greifeinrichtungen aufweisen, welche zum Greifen einzelner in dem Aufnahmebehältnis befindlicher Behältnisse geeignet und bestimmt ist.

Besonders bevorzugt wird diese Entnahmeeinrichtung in Abhängigkeit von wenigstens einem von der Bildaufnahmeeinrichtung aufgenommenen Bild gesteuert. Falls beispielsweise ermittelt wird, dass ein bestimmtes Behältnis fehlerhaft ist, kann in der Folge die Entnahmeeinrichtung dieses Behältnis aus dem Aufnahmebehältnis entfernen.

Um Behältnisse auszusortieren, welche nicht weiter in einer Linie verfahren bzw. weiter verarbeitet werden sollen, oder solche, welche keinen QR - Code oder eine sonstige Markierung aufweisen, könnte eine Entnahmeeinrichtung bzw. Packereinrichtung vorgesehen sein, welche bevorzugt einzeln ansteuerbare Packtulpen aufweist, um auf diese Weise unerwünschte Behältnisse aus dem Aufnahmebehältnis zu entfernen. Besonders bevorzugt ist hierzu ein übergreifendes Kommunikationsprotokoll vorgesehen, welches beispielsweise in der Zellebene der Linie Maschine übergreifend Daten austauschen kann, um so exakte Positionen der unerwünschten Flaschen weiterzugeben.

Besonders bevorzugt weist die Vorrichtung eine Speichereinrichtung auf, in welcher Informationen über gegebenenfalls fehlerhafte Behältnisse innerhalb des Aufnahmebehältnisses oder des Kastens gespeichert werden können.

Besonders bevorzugt wird der Anteil der Behältnisse in Reaktion auf ein von der Bildaufnahmeeinrichtung aufgenommenes Bild entnommen. So können beispielsweise Behältnisse ohne Markierung Beziehung sie ohne Code aussortiert werden oder auch Behältnisse mit einem unzutreffenden oder falschen Code.

Besonders bevorzugt werden bestimmte Behältnisse beispielsweise entnommene Behältnisse im weiteren Verfahren einer besonderen Behandlung, beispielsweise einem Waschvorgang oder einen Entsorgungsvorgang unterzogen. Hierbei ist es möglich, dass bestimmte Behältnisse beispielsweise Mehrwegbehältnisse gemeinsam oder ohne das Aufnahmebehältnis in eine Waschanlage wie eine Waschstraße gefahren werden. In diesem Fall werden bevorzugt die Behältnisse nicht zuerst aussortiert.

Ein Ausleseprozess der Behältnisse in den Kästen ist der gleiche wie zuvor beschrieben, allerdings entnimmt hier bevorzugt die Wascheinrichtung selbst fehlerhafte Behältnisse und führt sie ab.

Bevorzugt werden auch weitere zu reinigende Behältnisse entnommen und durchlaufen (bevorzugt simultan zum Aufnahmebehältnis) eine eigene Waschstraße in einer Waschmaschine.

Im internen Stand der Technik der Anmelderin werden Aufnahmebehältnisse separat aussortiert und gewaschen. Ein Vorteil kann darin bestehen, dass die sauberen Behältnisse am Ende eines Waschzyklus wieder in den Getränkekasten d. h. das Aufnahmebehältnis eingefügt werden können. Bevorzugt werden die Behältnisse anschließend wieder befüllt. Besonders bevorzugt wird zum Befüllen eine lineare Füllmaschine verwendet. Der Vorteil in der Verwendung einer linearen Füllmaschine liegt darin, dass diese auch Aufnahmebehältnisse bzw. Getränkekästen mit Behältnissen verarbeiten kann.

Bei einem weiteren bevorzugten Verfahren wird wenigstens ein Anteil der Behältnisse aus dem Aufnahmebehältnis entnommen. Hierbei kann es sich beispielsweise um fehlerhafte Behältnisse handeln, oder um Behältnisse, die nicht mehr weiter verarbeitet werden sollen. Daneben kann es sich hierbei auch um Behältnisse handeln, die keine Markierung aufweisen.

Bei einem weiteren bevorzugten Verfahren wird wenigstens ein Behältnis oder der Anteil der Behältnisse in Reaktion auf ein von der Bildaufnahmeeinrichtung aufgenommenes Bild entnommen. Dabei kann diese Entnahme unmittelbar nach der Inspektion erfolgen. Es wäre jedoch auch denkbar, dass diese Entnahme zu einem späteren Zeitpunkt der Verarbeitung erfolgt. Auch wäre es möglich, dass entsprechende leere Position des Aufnahmebehältnisses neu mit Behältnissen bestückt werden.

Die vorliegende Erfindung ist weiterhin auf ein Aufnahmebehältnis zur Aufnahme von Behältnissen gerichtet, wobei das Aufnahmebehältnis eine Vielzahl von Aufnahmebereichen aufweist, um die Behältnisse getrennt voneinander und in gleicher Ausrichtung aufzunehmen. Dabei ist in jedem Aufnahmebereich wenigstens ein und bevorzugt genau ein Behältnis aufnehmbar und das Aufnahmebehältnis weist wenigstens eine dieses Aufnahmebehältnis begrenzende Wandung auf.

Weiterhin ist in jedem dieser Aufnahmebereiche ein Boden vorgesehen, um die Behältnisse über ihre Bodenbereiche abzustützen.

Erfindungsgemäß weist jeder dieser Böden eine Ausnehmung auf, durch welchen hindurch ein Boden eines sich in diesem Aufnahmebereich befindlichen Behältnisses beobachtbar und/oder inspizierbar ist.

Dabei kann es sich besonders bevorzugt bei dieser Ausnehmung um eine Ausnehmung mit einem quadratischen oder rechteckigen oder kreisförmigen Querschnitt handeln. Diese Ausnehmung weist jedoch bevorzugt einen Querschnitt auf, der geringer ist als der Querschnitt des Bodenbereichs des Behältnisses so dass dieses nach wie vor von dem Bodenbereich abgestützt ist und nicht nach unten aus dem Aufnahmebehältnis herausfallen kann.

Die besagte Öffnung der Ausnehmung ermöglicht bevorzugt Scanfunktionen, die einen Sichtkontakt benötigen. Der Vorteil in der Verwendung einer rechteckigen oder quadratischen Form der Aussparung oder Ausnehmung besteht darin, dass diese Form eine axiale Lagerung der Behältnisse erleichtert.

Die Serialisierung von Behältnissen spielt vor allem in Mehrwegzyklen von Mehrwegflaschen eine große Rolle. Hier können durch die Nachverfolgbarkeit die schon durchgelaufenen Mehrwegzyklen der Behältnisse für einen Getränkehersteller und auch für den Endkunden eingesehen werden und so eine effizientere Handhabung in der Mehrweglinie ermöglicht werden.

Als Beispiel kann die Behältniswaschung erwähnt werden, bei welcher bestimmte Behältnisse aus dem Prozess ausgeschleust (aufgrund von Alter oder zu starker Verschmutzung) oder möglicherweise in Zukunft auch präzise auf den jeweiligen Verschmutzungsgrad einer Behältnisgattung oder eines Behältnisses eingehen kann. Auf diese Weise kann der Mehrwegprozess entschlackt werden und somit kann Zeit und Energie eingespart werden.

Besonders bevorzugt weist wenigstens einer der Aufnahmebereiche und bevorzugt jeder der Aufnahmebereiche eine Positioniereinrichtung und insbesondere eine Zentriereinrichtung auf, welche ein Behältnis gegenüber diesem Aufnahmebereich positioniert und insbesondere zentriert. Unter einem Positionieren wird insbesondere verstanden, dass die Behältnisse derart gegenüber den jeweiligen Aufnahmebereichen positioniert sind, dass diese ein Bewegungsspiel von weniger als 5mm, bevorzugt von weniger als 4mm, bevorzugt von weniger als 3mm, bevorzugt von weniger als 2mm und besonders bevorzugt von weniger als 1mm aufweisen.

Auf diese Weise wird auch eine Bildauswertung der Behältnisse erleichtert. Besonders bevorzugt verbringt die Zentriereinrichtung bzw. Positioniereinrichtung das Behältnis jeweils bezüglich dem zugeordneten Aufnahmebereich in eine zentrale und/oder mittige Position.

Die vorliegende Erfindung ist weiterhin auf eine Vorrichtung zum Inspizieren von Gebinden gerichtet, wobei eine erste Transporteinrichtung vorgesehen ist, welche mit Behältnissen bestückte Aufnahmebehältnisse entlang eines vorgegebenen Transportpfads transportiert, wobei die Behältnisse in ihren Bodenbereichen jeweils eine Markierung aufweisen, welche bevorzugt dazu geeignet und bestimmt sind, die Behältnisse eindeutig zu identifizieren und/oder welche für wenigstens eine Eigenschaft der Behältnisse charakteristisch ist und/oder welche dafür geeignet und bestimmt ist, wenigstens eine physikalische Eigenschaft der Behältnisse auslesbar und/oder ermittelbar zu machen.

Erfindungsgemäß weist die Vorrichtung eine Bildaufnahmeeinrichtung auf, welche wenigstens ein Bild der Bodenbereiche der in dem Aufnahmebehältnis bzw. Gebinde befindlichen Behältnisse aufnimmt und welche bevorzugt wenigstens eine Information ausgibt, welche für die an den Behältnissen angeordneten Markierungen und/oder die wenigstens eine Eigenschaft der Behältnisse charakteristisch ist (oder eine Ermittlung derselben ermöglicht).

Es wird daher eine Vorrichtung vorgeschlagen, welche entsprechende Markierungen der Behältnisse ausliest und insbesondere Daten ausgibt, welche für diese Markierungen und/oder für das Behältnis, an dem diese Markierung angeordnet sind charakteristisch sind.

Bei einer bevorzugten Ausführungsform weist die Vorrichtung eine zweite Transporteinrichtung auf, welche die Gebinde bzw. Aufnahmebehältnisse zu einer Bildaufnahmeeinrichtung transportiert und/oder die Gebinde bzw. Aufnahmebehältnisse von der Bildaufnahmeeinrichtung abtransportiert. Es wird daher vorgeschlagen, dass diese Transporteinrichtung die Behältnisse in einen Bildaufnahmebereich der Bildaufnahmeeinrichtung transportiert, in dem diese Bildaufnahmeeinrichtung wenigstens ein Bild der Behältnisse aufnehmen kann.

Besonders bevorzugt weist die zweite Transporteinrichtung eine Greifeinrichtung auf, welche dazu geeignet und bestimmt ist, die Behältnisse zu greifen. Bei einer weiteren vorteilhaften Ausführungsform ist die Bildaufnahmeeinrichtung stationär (bezüglich einer Bewegung der Gebinde) angeordnet.

Besonders bevorzugt ist eine Beleuchtungseinrichtung vorgesehen, welche die Behältnisse und/oder die Aufnahmebehältnisse zum Zwecke der Bildaufnahme beleuchtet. Auf diese Weise kann durch eine Bildauswertung leichter die Markierung auf den Behältnissen festgestellt werden.

Besonders bevorzugt weist die Vorrichtung eine (Bild)auswerteeinrichtung auf, welche die aufgenommenen Bilder insbesondere hinsichtlich der angebrachten Markierungen auswertet. Dabei ist es möglich, dass die (Bild)auswerteeinrichtung lediglich feststellt, dass Markierungen vorhanden sind. Darüber hinaus wäre jedoch auch denkbar, dass jede einzelne Markierung ausgelesen wird.

Dabei ist zu beachten, dass diese (Bild)auswerteeinrichtung bevorzugt auch die Markierung unabhängig von einer Drehstellung der Behältnisse erfassen kann. Üblicherweise werden sich die Behältnisse nicht in einer definierten Drehstellung einem Aufnahmebehältnis befinden, sondern willkürlich. In Abhängigkeit von der Markierung kann die Auswerteeinrichtung feststellen, ob und ggfs., wie die Markierung verdreht ist, um gleichwohl eine Auswertung der Markierung zu ermöglichen.

Besonders bevorzugt werden von der Bildaufnahmeeinrichtung mehrere Markierungen und/oder mehrere Behältnisse gleichzeitig aufgenommen und die entsprechenden Bilder besonders bevorzugt ausgewertet. Dabei kann insbesondere auch festgestellt werden, ob sich in dem Aufnahmebehältnis Behältnisse ohne Markierung befinden.

Besonders bevorzugt handelt es sich bei ersten Transporteinrichtung um ein Transportband. Besonders bevorzugt handelt es sich bei der zweiten Transporteinrichtung um einen Roboter und insbesondere einen Mehrachsenroboter.

Besonders bevorzugt weist die Vorrichtung eine Behältnisentnahmeeinrichtung auf, welche dazu geeignet und bestimmt ist, einzelne Behältnisse aus dem Gebinde bzw. dem Aufnahmebehältnis zu entnehmen. Dabei ist es möglich, dass diese Behältnisse in Reaktion auf ein von der Bildaufnahmeeinrichtung aufgenommenes und/oder ausgewertetes Bild entnommen werden.

Weitere Vorteile und Ausführungsformen ergeben sich aus den beigefügten Zeichnungen:
Darin zeigen:
- Fig. 1: eine Darstellung einer erfindungsgemäßen Vorrichtung;
- Fig. 2: eine detailliertere Darstellung einer erfindungsgemäßen Vorrichtung;
- Fig. 3: eine Darstellung eines Aufnahmebehältnisses; und
- Fig. 4: eine Ansicht eines bestückten Aufnahmebehältnisses von unten.

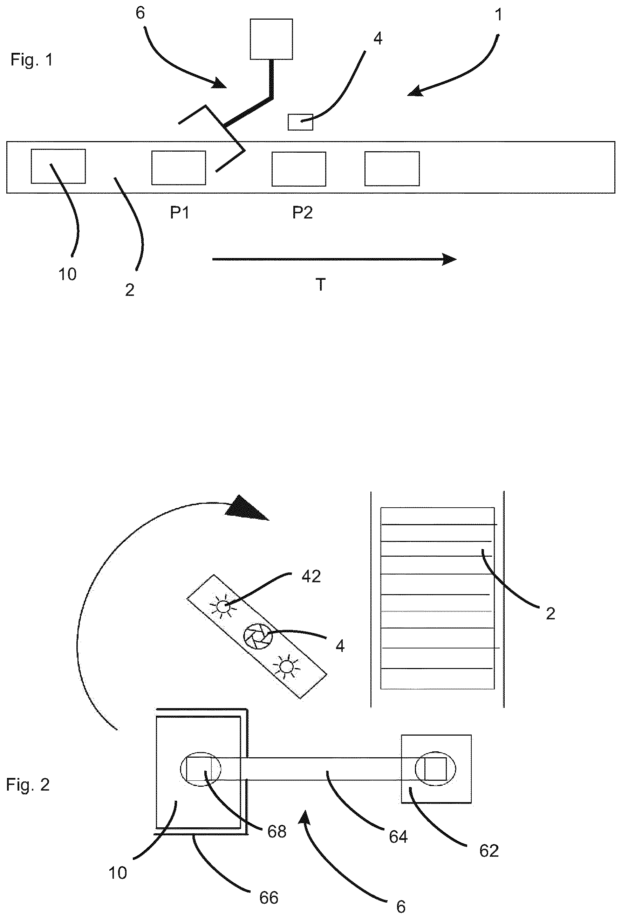

Fig. 1 zeigt eine schematische Darstellung einer erfindungsgemäßen Vorrichtung 1. Diese weist eine Transporteinrichtung 2 in Form eines Transportbandes auf, auf dem Aufnahmebehältnisse 10 für Behältnisse (nicht gezeigt) entlang des Transportpfads T transportiert werden. Die Bezugszeichen P1 und P2 kennzeichnen zwei mögliche Positionen der Aufnahmebehältnisse 10 auf der Transporteinrichtung 2. Bevorzugt transportiert die erste Transporteinrichtung 2 die Aufnahmebehältnisse 10 geradlinig.

Das Bezugszeichen 6 kennzeichnet eine zweite Transporteinrichtung, welche dazu dient, die Aufnahmebehältnisse 10 zu greifen und über eine Bildaufnahmeeinrichtung 4 zu schwenken, sodass diese Bilder der Unterseiten der Behältnisse 20 aufnehmen kann. Bevorzugt ermöglicht diese zweite Transporteinrichtung 6 einen Transport bzw. eine Bewegung der Aufnahmebehältnisse 10 in wenigstens zwei zueinander senkrechte Richtungen und bevorzugt in drei zueinander senkrechte Richtungen.

Bevorzugt ist ein Transportpfad der von der zweiten Transporteinrichtung 6 transportierten Behältnisse 20 veränderbar und insbesondere frei programmierbar.

Fig. 2 zeigt eine detailliertere Darstellung dieser Entnahme der Aufnahmebehältnisse 10. Dabei weist die zweite Transporteinrichtung 6 eine Antriebseinrichtung 62 auf, welche einen schwenkbaren Arm 64 schwenken kann. An diesem schwenkbaren Arm 64 ist über einen Drehantrieb 68 die eigentliche Greifeinrichtung 66 angeordnet, welche die Behältnisse 20 greift.

Die Aufnahmebehältnisse 10 können über die Bildaufnahmeeinrichtung 4 (hinweg) transportiert werden. Wie oben erwähnt kann dabei der Transport angehalten werden, wenn das Aufnahmebehältnis 10 oberhalb der Bildaufnahmeeinrichtung 4 angeordnet ist.

Das Bezugszeichen 42 kennzeichnet Beleuchtungseinrichtungen, welche zum Zwecke der Bildaufnahme die Unterseite des Aufnahmebehältnisses 10 und/oder die Behältnisse 20 von unten beleuchten können. Dabei kann diese Beleuchtung und auch die Bildaufnahme auf die jeweils verwendeten Behältnisse 20 und die daran angeordnete Markierung 12 optimiert sein.

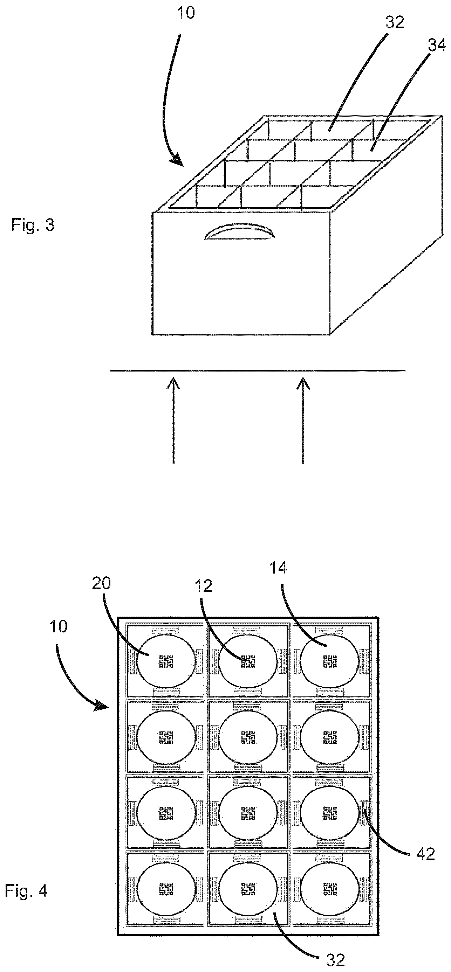

Fig. 3 zeigt eine Darstellung eines Aufnahmebehältnisses 10. Dieses weist eine Vielzahl von Aufnahmebereichen (hier nur zwei Aufnahmebereiche 32, 34 gezeigt) auf, in welche jeweils Behältnisse 20 eingestellt werden können.

Fig. 4 zeigt ein mit Behältnissen 20 bestücktes Aufnahmebehältnis 10 von unten. Dabei befinden sich hier in dem Aufnahmebehältnis 10 bzw. in den einzelnen Aufnahmebereichen 32, 34... jeweils Behältnisse 20, wie beispielsweise Flaschen. Diese Flaschen weisen jeweils eine Markierung 12 auf, die an dem Behältnisböden 14 angeordnet ist.

Das Bezugszeichen 42 kennzeichnet Zentriereinrichtungen und/oder Positioniereinrichtungen, welche die Behältnisse 20 gegenüber den Aufnahmebereichen 32 zentrieren und/oder positionieren.

Die Bildaufnahmeeinrichtung 4 kann hier ein Bild des Aufnahmebehältnisses 10 mit den insgesamt zwölf Behältnissen 20 aufnehmen. Weiterhin erlaubt die Bildauswerteeinrichtung die Auswertung der einzelnen Markierungen 12 und damit auch eine Aussage über charakteristische Eigenschaften der einzelnen Behältnisse 20.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Inspizieren von Gebinden (10), wobei mit Behältnissen (20) bestückte Aufnahmebehältnisse (10) mittels einer ersten Transporteinrichtung (2) transportiert werden und wobei die Behältnisse (20) in ihren Bodenbereichen jeweils eine Markierung (12) aufweisen, welche die Behältnisse (20) eindeutig identifiziert,
**dadurch gekennzeichnet, dass**
eine Bildaufnahmeeinrichtung (4) wenigstens ein Bild der Bodenbereiche (14) der in dem Aufnahmebehältnis (10) befindlichen Behältnisse (20) durch eine entsprechende Öffnung des Aufnahmebehältnisses (10) hindurch aufnimmt und wenigstens eine Information ausgegeben wird, welche für die an den Behältnissen (20) angeordneten Markierungen (12) und/oder für wenigstens eine Eigenschaft der Behältnisse (20) charakteristisch ist.

2. Verfahren nach Anspruch 1,
**dadurch gekennzeichnet, dass**
die Bildaufnahmeeinrichtung (4) stationär angeordnet ist und die Aufnahmebehältnisse (10) an der Bildaufnahmeeinrichtung (4) vorbei transportiert wird.

3. Verfahren nach wenigstens einem der vorangegangenen Ansprüche,
**dadurch gekennzeichnet, dass**
die Aufnahmebehältnisse (10) mittels einer Greifeinrichtung (66) gegriffen werden und in einen Bildaufnahmebereich der Bildaufnahmeeinrichtung (4) verbracht werden.

4. Verfahren nach wenigstens einem der vorangegangenen Ansprüche,
**dadurch gekennzeichnet, dass**
die Aufnahmebehältnisse mittels einer zweiten Transporteinrichtung (6), welche sich insbesondere von der ersten Transporteinrichtung (2) unterscheidet zum Zwecke der Bildaufnahme transportiert werden.

5. Verfahren nach dem vorangegangenen Anspruch,
**dadurch gekennzeichnet, dass**
die zweite Transporteinrichtung (6) die Aufnahmebehältnisse (10) von der ersten Transporteinrichtung (2) entnimmt und bevorzugt die Aufnahmebehältnisse (10) zeitlich und/oder örtlich nach der Bildaufnahme wieder auf der ersten Transporteinrichtung (2) ablegt.

6. Verfahren nach wenigstens einem der vorangegangenen Ansprüche,
**dadurch gekennzeichnet, dass**
eine Bewegung der Aufnahmebehältnisse (10) wenigstens zeitweise angehalten wird, um ein Bild der Bodenbereiche aufzunehmen.

7. Verfahren nach wenigstens einem der vorangegangenen Ansprüche,
**dadurch gekennzeichnet, dass**
die Behältnisse (20) gegenüber den Aufnahmebehältnissen (10) in vorgegebenen Positionierungen positioniert werden.

8. Verfahren nach wenigstens einem der vorangegangenen Ansprüche,
**dadurch gekennzeichnet, dass**
wenigstens ein Anteil der Behältnisse (20) aus dem Aufnahmebehältnis (10) entnommen wird.

9. Verfahren nach dem vorangegangenen Anspruch,
**dadurch gekennzeichnet, dass**
wenigstens ein Behältnis (20) oder der Anteil der Behältnisse (20) in Reaktion auf ein von der Bildaufnahmeeinrichtung (4) aufgenommenes Bild entnommen wird.

10. Vorrichtung zum Inspizieren von Gebinden (10) in Form von mit Behältnissen bestückten Aufnahmebehältnissen, mit einer ersten Transporteinrichtung (2), welche mit Behältnissen (20) bestückte Aufnahmebehältnisse (10) entlang eines vorgegebenen Transportpfads (T) transportiert wobei die Behältnisse (20) in ihren Bodenbereichen jeweils eine Markierung (12) aufweisen, welche die Behältnisse (20) eindeutig identifizieren und/oder welcher für wenigstens eine Eigenschaft der Behältnisse (20) charakteristisch sind,
**dadurch gekennzeichnet, dass**
die Vorrichtung eine Bildaufnahmeeinrichtung (4) aufweist, welche wenigstens ein Bild der Bodenbereiche der in dem Aufnahmebehältnis (10) befindlichen Behältnissen (20) durch eine entsprechende Öffnung des Aufnahmebehältnisses (10) hindurch aufnimmt und wenigstens eine Information ausgibt, welche für die an den Behältnissen (20) angeordneten Markierungen und/oder die Behältnisse (20) und/oder für wenigstens eine Eigenschaft der Behältnisse (20) charakteristisch ist ausgibt.

11. Vorrichtung nach Anspruch 10,
**dadurch gekennzeichnet, dass**
die Vorrichtung eine zweite Transporteinrichtung (6) aufweist, welche die Aufnahmebehältnisse (10) zu der Bildaufnahmeeinrichtung (4) transportiert und/oder die Aufnahmebehältnisse (10) von der Bildaufnahmeeinrichtung (4) abtransportiert.

12. Vorrichtung (1) nach wenigstens einem der vorangegangenen Ansprüche,
**dadurch gekennzeichnet, dass** die Vorrichtung (1) eine Behältnisentnahmeeinrichtung aufweist, welche dazu geeignet und bestimmt ist, einzelne Behältnisse (20) aus dem Aufnahmebehältnis (10) zu entnehmen.

## Claims

1. A method for inspecting bundles (10), wherein receiving containers (10) equipped with containers (20) are transported by a first transport device (2) and wherein the containers (20) each have a marking (12) in their bottom regions which unambiguously identifies the containers (20),
**characterized in that**
an image recording device (4) records at least one image of the bottom regions (14) of the containers (20) located in the receiving container (10) through a corresponding opening in the receiving container (10) and at least one information is output which is characteristic of the markings (12) arranged on the containers (20) and/or of at least one property of the containers (20).

2. The method according to claim 1,
**characterized in that**
the image recording device (4) is arranged stationary and the receiving containers (10) are transported past the image recording device (4).

3. The method according to at least one of the preceding claims,
**characterized in that**
the receiving containers (10) are gripped by a gripping device (66) and are brought into an image recording area of the image recording device (4).

4. The method according to at least one of the preceding claims,
**characterized in that**
the receiving containers are transported by a second transport device (6), which in particular differs from the first transport device (2), for the purpose of image recording.

5. The method according to the preceding claim,
**characterized in that**
the second transport device (6) removes the receiving containers (10) from the first transport device (2) and preferably the second transport device places the receiving containers (10) back on the first transport device (2) in terms of time and/or location after the image has been recorded.

6. The method according to at least one of the preceding claims,
**characterized in that**
a movement of the receiving containers (10) is stopped at least temporarily in order to take an image of the bottom regions.

7. The method according to at least one of the preceding claims,
**characterized in that**
the containers (20) are positioned in predetermined positioning relative to the receiving containers (10).

8. The method according to at least one of the preceding claims,
**characterized in that**
at least a portion of the containers (20) is removed from the receiving container (10).

9. The method according to the preceding claim,
**characterized in that**
at least one container (20) or the portion of containers (20) is removed in response to an image recorded by the image recording device (4).

10. An apparatus for inspecting bundles (10) in form of receiving containers equipped with containers, having a first transport device (2) which transports receiving containers (10) equipped with containers (20) along a predetermined transport path (T), wherein the containers (20) each having a marking (12) in their bottom regions which unambiguously identifies the containers (20) and/or which is characteristic of at least one property of the containers (20),
**characterized in that**
the apparatus has an image recording device (4) which records at least one image of the bottom regions of the containers (20) located in the receiving container (10) through a corresponding opening in the receiving container (10) and outputs at least one information which is characteristic of the markings arranged on the containers (20) and/or of the containers (20) and/or of at least one property of the containers.

11. The apparatus according to claim 10,
**characterized in that**
the apparatus comprises a second transport device (6) which transports the receiving containers (10) to the image recording device (4) and/or transports the receiving containers (10) away from the image receiving device (4).

12. The apparatus (1) according to at least one of the preceding claims,
**characterized in that**
the apparatus (1) comprises a container removal device which is suitable and intended for removing individual containers (20) from the receiving container (10).

## Revendications

1. Procédé d'inspection de contenants (10), dans lequel des récipients de réception (10) remplis de récipients (20) sont transportés au moyen d'un premier système de transport (2) et dans lequel les récipients (20) présentent chacun dans leurs zones de fond un marquage (12), lequel identifie clairement les récipients (20),
**caractérisé en ce que**
un système d'acquisition d'image (4) acquiert au moins une image des zones de fond (14) des récipients (20) se trouvant dans le récipient de réception (10) à travers une ouverture correspondante du récipient de réception (10) et au moins une information est émise, laquelle est caractéristique des marquages (12) disposés sur les récipients (20) et/ou d'au moins une propriété des récipients (20).

2. Procédé selon la revendication 1,
**caractérisé en ce que**
le système d'acquisition d'image (4) est disposé de manière fixe et les récipients de réception (10) sont transportés le long du système d'acquisition d'image (4).

3. Procédé selon au moins l'une quelconque des revendications précédentes,
**caractérisé en ce que**
les récipients de réception (10) sont saisis au moyen d'un système de préhension (66) et amenés dans une zone d'acquisition d'image du système d'acquisition d'image (4).

4. Procédé selon au moins l'une quelconque des revendications précédentes,
**caractérisé en ce que**
les récipients de réception sont transportés au moyen d'un deuxième système de transport (6), lequel se distingue en particulier du premier système de transport (2) aux fins de l'acquisition d'image.

5. Procédé selon la revendication précédente,
**caractérisé en ce que**
le deuxième système de transport (6) prélève les récipients de réception (10) du premier système de transport (2) et dépose de préférence les récipients de réception (10) de nouveau sur le premier système de transport (2) dans le temps et/ou localement après l'acquisition d'image.

6. Procédé selon au moins l'une quelconque des revendications précédentes,
**caractérisé en ce que**
un mouvement des récipients de réception (10) est arrêté au moins temporairement pour acquérir une image des zones de fond.

7. Procédé selon au moins l'une quelconque des revendications précédentes,
**caractérisé en ce que**
les récipients (20) sont positionnés par rapport aux récipients de réception (10) dans des positionnements prédéfinis.

8. Procédé selon au moins l'une quelconque des revendications précédentes,
**caractérisé en ce que**
au moins une partie des récipients (20) est prélevée du récipient de réception (10).

9. Procédé selon la revendication précédente,
**caractérisé en ce que**
au moins un récipient (20) ou la partie des récipients (20) est prélevé(e) en réponse à une image acquise par le système d'acquisition d'image (4).

10. Dispositif d'inspection de contenants (10) sous forme de récipients de réception remplis de récipients, avec un premier système de transport (2), lequel transporte des récipients de réception (10) remplis de récipients (20) le long d'une voie de transport (T) prédéfinie, dans lequel les récipients (20) présentent respectivement dans leurs zones de fond un marquage (12), lesquels identifient clairement les récipients (20) et/ou lesquels sont caractéristiques d'au moins une propriété des récipients (20),
**caractérisé en ce que**
le dispositif présente un système d'acquisition d'image (4), lequel acquiert au moins une image des zones de fond des récipients (20) se trouvant dans le récipient de réception (10) à travers une ouverture correspondante du récipient de réception (10) et émet au moins une information, laquelle est caractéristique des marquages disposés sur les récipients (20) et/ou des récipients (20) et/ou d'au moins une propriété des récipients (20).

11. Dispositif selon la revendication 10,
**caractérisé en ce que**
le dispositif présente un deuxième système de transport (6), lequel transporte les récipients de réception (10) vers le système d'acquisition d'image (4) et/ou évacue les récipients de réception (10) du système d'acquisition d'image (4).

12. Dispositif (1) selon au moins l'une quelconque des revendications précédentes,
**caractérisé en ce que**
le dispositif (1) présente un système de prélèvement de récipients, lequel est adapté pour et destiné à prélever des récipients (20) individuels du récipient de réception (10).
